# EUROPEAN PATENT SPECIFICATION

(11) **EP 3 231 208 B1**
(45) Date of publication and mention of the grant of the patent: **22.01.2020**
(21) Application number: 14907820.6
(22) Date of filing: 10.12.2014
(51) Int. Cl.: H04W 12/08, H04W 48/04, H04L 29/08, G06F 21/62, G06F 21/44

(54) **LOCAL AUTHENTICATION**
LOKALE AUTHENTIFIZIERUNG
AUTHENTIFICATION LOCALE

(43) Date of publication of application: 18.10.2017
(73) Proprietor: Nokia Technologies Oy, 02610 Espoo (FI)
(72) Inventor: BISWAS, Debmalya, CH-1018 Lausanne (CH); NOLAN, Julian, CH-1009 Pully (CH); LAWRENSON, Matthew John, CH-1030 Bussigny-Pres-de-Lausanne (CH)
(74) Representative: Seppo Laine Oy
(86) International application number: PCT/FI2014/050976
(87) International publication number: WO 2016/092143

(56) References cited:
- WO-A1-2011/116528
- WO-A1-2014/051577
- US-A1- 2010 048 167
- US-A1- 2011 016 534
- US-A1- 2013 171 935
- US-A1- 2013 269 013
- US-A1- 2014 214 891
- US-A1- 2014 259 129
- US-A1- 2014 287 686
- US-A1- 2014 344 420
- SUHAS MATHUR ET AL: "ProxiMate", MOBISYS '11, ACM, US, 28 June 2011 (2011-06-28), pages 211-224, XP058004573, DOI: 10.1145/1999995.2000016 ISBN: 978-1-4503-0643-0
- MING KI CHONG ET AL: "A Survey of User Interaction for Spontaneous Device Association", ACM COMPUTING SURVEYS, ACM, NEW YORK, NY, US, US, vol. 47, no. 1, 1 May 2014 (2014-05-01), pages 1-40, XP058049794, ISSN: 0360-0300, DOI: 10.1145/2597768

## Description

### FIELD OF INVENTION

The present invention relates to verifying a relative location of at least one mobile device.

### BACKGROUND OF INVENTION

When conducting a transaction with another party, it may be useful to authenticate the other party to ensure he is who he claims to be. In financial transactions, for example, it is important to ascertain that a person presenting a credit card, or credit card number, is the cardholder who is authorized to use the card. In some transactions, the location of the parties is relevant, for example some processes can only be safely conducted at low altitude, or near water.

Authenticating another party may take place using one or more procedures. For example, an ability to produce a correct handwritten signature is accepted in many circumstances as an appropriate authentication. In other cases, a biometric identification of a person may be employed using at least one biometric identifier. Examples of biometric identifiers include fingerprints and patterns of blood vessels in a retina. Biometric identifiers may be stored in passports or user databases, for example.

In internet commerce, authentication of a party is often performed using certificates in a transport layer security, TLS, handshake. In TLS, a client contacts a server, after which the server provides to the client its certificate, which is cryptographically signed and contains a public key of the server. The client verifies the cryptographic signature and initiates communications with the server based on the public key. Since only the server can decrypt information encrypted with the public key, and the public key was cryptographically signed, eavesdropping of the ensuing connection is rendered difficult.

In mobile devices, a subscriber identity module, SIM, may be configured with a secret, which is relied on when the mobile device registers with a cellular communications network. Thus communications from the mobile device may be secured against eavesdropping, and monetary charging is enabled since only the user of the subscription has the secret.

When communicating with servers on the internet via a mobile device, authentication may occur on different levels. First the mobile may authenticate itself to the network in order to be granted access to network resources, and then a server on the internet may authenticate itself, for example using TLS, to the mobile. If a purchase is made from the server, the user may use, for example, a two-factor authentication token received from his bank to cause a charge to be made to his credit card.

### SUMMARY OF THE INVENTION

The invention is defined by the features of the independent claims. Some specific embodiments are defined in the dependent claims.

At least some embodiments of the present invention find industrial application in facilitating secure access to resources.

### BRIEF DESCRIPTION OF THE DRAWINGS

FIGURE 1 illustrates an example system capable of supporting at least some embodiments of the present invention;
FIGURE 2 illustrates an example use case in accordance with at least some embodiments of the present invention;
FIGURE 3 illustrates an example apparatus capable of supporting at least some embodiments of the present invention;
FIGURE 4 illustrates signalling in accordance with at least some embodiments of the present invention;
FIGURE 5 is a first flow chart of a first method in accordance with at least some embodiments of the present invention;
FIGURE 6 is a second flow chart of a second method in accordance with at least some embodiments of the present invention, and
FIGURE 7 is a third flow chart of a third method in accordance with at least some embodiments of the present invention.

### DETAILED DESCRIPTION OF EXAMPLE EMBODIMENTS

A sensor-based co-location authentication is disclosed, wherein physical proximity is determined based on a comparison of sensor outputs from two devices. The devices are determined to be physically close to each other in case the sensor outputs from the devices reflect a shared environment.

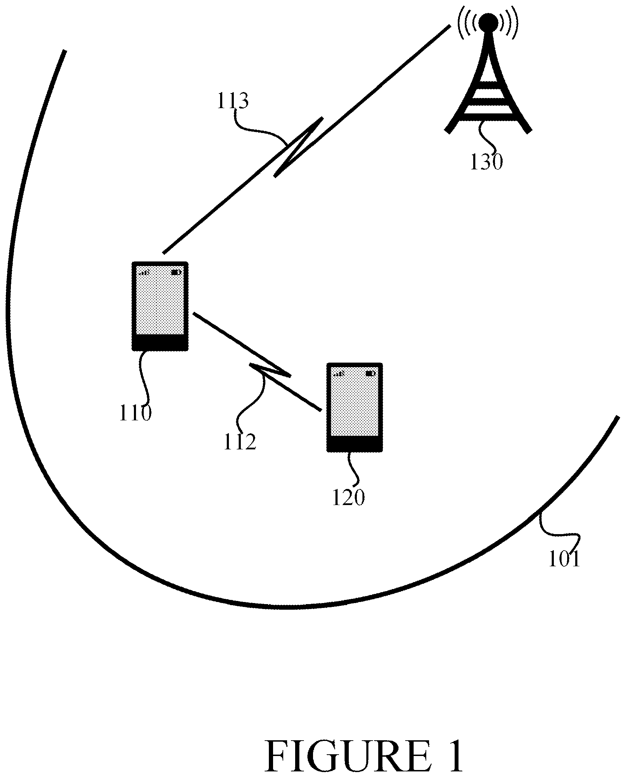

FIGURE 1 illustrates an example system capable of supporting at least some embodiments of the present invention. The system of FIGURE 1 comprises device 110, which may comprise, for example, a cellular telephone, user equipment, smartphone, tablet computer, laptop computer or other suitable electronic device. Device 110 may be located in a car, a user's pocket or other suitable place, for example.

Base station 130 may be configured to operate in accordance with at least one radio access technology, RAT. For example, base station 130 may be configured to operate in accordance with wideband code division multiple access, WCDMA, long term evolution, LTE, wireless local area network, WLAN, and/or IS-95 technology. Base station 130 may be configured to operate in accordance with a cellular and/or non-cellular RAT.

The network where base station 130 is comprised in may comprise further base stations, which however are not illustrated in FIGURE 1 for the sake of clarity. Base station 130 is arranged to control a cell. The cell is schematically illustrated in FIGURE 1 as cell 101.

A wireless communication capability of device 110 may be compatible with that of base station 130, in other words device 110 may be configured to support a same RAT as base station 130. Device 110 may then establish a radio link with base station 130 when device 110 is disposed inside the coverage area or cell 101. The radio link may operate in accordance with code division multiple access, CDMA, time division multiple access, TDMA, orthogonal frequency division multiple access, OFDMA, or a combination thereof, for example. Device 110 may be configured to determine, based on a radio measurement, whether it is within the coverage area of cell 101 controlled by base station 130. For example, device 110 may measure the energy of a training sequence or reference symbols transmitted by base station 130.

In the system of FIGURE 1, device 110 is in the coverage area of cell 101 controlled by base station 130. A radio link 113 connects device 110 to base station 130, wherein radio link 113 may comprise a radio link in accordance with the RAT device 110 and base station 130 both support.

Radio link 112 connects device 110 with device 120, which may be a device of similar, or even same, type as device 110. In detail, device 120 may comprise a cellular telephone, user equipment, smartphone, tablet computer, laptop computer or other suitable electronic device. Link 112 may be short-range in the sense that a maximum communication range of link 112 may be shorter than, for example, that of radio link 113. For example, link 112 may be arranged in accordance with Bluetooth, Bluetooth-LE or another low-power radio interface. In some embodiments, link 112 is a wire-line link such as, for example, a universal serial bus, USB, cable. The range of such a link is limited by the length of the cable, which may be one meter in length, for example.

Device 110 may have a resource that device 120, or a user of device 120, wishes to access. Examples of suitable resources include electronic documents and network connectivity. Device 110 may be configured to grant access, at least in part, to resources of device 110 to further devices that are physical near of device 110. In order to determine, whether a device is physical near device 110 may be configured to apply principles of the present invention. Being physical near may comprise that a distance between the devices is small or moderate, and/or that the devices are co-moving, for example due to being on board the same vehicle.

Device 110 may receive a request, for example via link 112, from device 120 to access resources of device 110. Alternatively or additionally to link 112, the request may be routed via base station 130 and/or a further base station, for example, in case both device 110 and device 120 are enabled to communicate with a cellular network. Device 110 may perform an authentication of device 120 in connection with deciding whether to grant the requested access to resources. In detail, device 110 may perform a co-location authentication, by which it is meant a verification that the requesting device, such as device 120, is co-located with device 110. In other words, device 110 may be configured to establish whether device 120 is physically near device 110.

To determine whether device 120 is physically near device 110, device 110 and device 120 may participate in a co-location authentication process with each other. The co-location authentication process may be conducted between device 110 and device 120 in the sense that device 110 or device 120 is an endpoint of each message comprised in the co-location authentication process. In a first phase of this authentication, the devices may establish a set of sensor types that is common to both devices, that is, sensor types that both device 110 and device 120 have. Examples of suitable sensor types include electromagnetic receivers, for example radio receivers, microphones, cameras, satellite positioning receivers, acceleration sensors and gyroscopes.

A list of common sensor types may be established, for example, by a first one of device 110 and device 120 providing a list of all its sensor types to the second one of device 110 and device 120, and the second one then returning to the first one a subset of the list that comprises the sensor types that the second one has. In some embodiments, only location-sensitive sensor types are selected in this phase and sensor types that produce sensor output that is not sensitive to location are omitted or removed from the lists. For example, a clock is not sensitive to location, since time does not depend on location. On the other hand, a pollution sensor may be considered to be sensitive to location, since pollution levels vary from one location to another.

In a second phase of the authentication, device 110 and device 120 may agree on obtaining sensor output using at least one of the common location-sensitive sensors. For example, the devices may agree which of the common location-sensitive sensors to use, a time instant when the sensor or sensors is to be used, and, where applicable, for how long data is to be captured with the at least one selected sensor to produce the sensor output. When the sensors are used at the same time, their outputs are rendered comparable to each other. Optionally in this phase, the devices may calibrate their internal clocks, to improve the accuracy of the agreed time instant. The clocks may be calibrated by agreeing, between device 110 and device 120, to obtain a fresh time from a base station, or a satellite, for example.

In a third phase of the authentication, device 110 and device 120 use the selected location-sensitive sensor or sensors to obtain sensor output. The obtaining may be performed internally in device 110 and device 120, respectively, by obtaining from sensors comprised in these devices sensor output, which may be stored in a memory internal to these devices. In other words, device 110 would obtain sensor output from at least one location-sensitive sensor comprised in device 110, and device 120 would obtain sensor output from at least one location-sensitive sensor comprised in device 120. Device 120 may provide its sensor output to device 110, to enable a comparison by device 110 of sensor output obtained in device 110 to sensor output obtained in device 120, and provided to device 110. In case the outputs match, that is, they have similar features or substantially same values, device 110 may conclude that device 120 is physically near device 110. This is the case, since the sensor or sensors used is, or are, location-sensitive. For example, where the sensor used comprises a satellite positioning receiver, device 110 may compare a satellite positioning output it obtains from its own satellite positioning receiver to a satellite positioning output device 110 receives from device 120. In this case, device 120 would obtain from its satellite positioning receiver a sensor output indicating the location of device 120 according to the satellite positioning system. In case the outputs indicate a same position, by which it is meant the positions differ from each other by less than a preconfigured threshold amount, device 110 may conclude device 120 is physically near, and access to the requested resources may be, at least in part, granted.

When it is in the second phase decided, between device 110 and device 120, to use more than one location-sensitive sensor, device 110 may conclude the authentication is successful when all of the sensor outputs of device 110 match those provided to device 110 by device 120. In the second phase, device 110 may be authorized to override device 120 in deciding which sensors are to be used in the third phase, since it is the resources of device 110 that are requested by device 120. In case device 120 indicates, in the first phase, to device 110 a list of location-sensitive sensor types that does not satisfy minimum requirements of device 110, device 110 may decline co-location authentication. In some embodiments, multiple sensor outputs are obtained from each of the selected sensor or sensors, and device 110 only concludes the authentication is successful of each one of the multiple sensor outputs obtained internally in device 110 matches with a respective sensor output provided to device 110 by device 120. In case device 120 is not close to device 110, it cannot know the sensor output values device 110 will obtain, and thus it cannot provide to device 110 sensor outputs that would cause device 110 to grant access to the resources.

Device 110 may be configured to grant a first level of access to the resources responsive to a first co-location authentication with device 120 being successful. A first level of access may comprise access to local files, for example. Device 110 may have a list of levels of access, starting from a lowest, or first, level of access and proceeding in stages to higher levels of access. For example, a first level of access may correspond to access to locally stored photographs. A second level of access may correspond, in addition to the access of the first level, to access to an address book of device 110. A third level of access may correspond, in addition to the access of the second level, to access to a networking capability of device 110. A fourth level of access may correspond, in addition to the access of the third level, to access to a web store user account of a user of device 110. Alternatively, files and/or applications in device 110 may be classified to different levels of access, such as for example a first level of access, a second level of access and a third level of access.

Progressively increasing access to resources of device 110 may be useful, for example, between friends or family members who spend a lot of time near each other.

Device 110 may be configured to grant a first level of access responsive to a first co-location authentication with device 120 succeeding. After the first co-location authentication, a second co-location authentication may take place between device 120 and device 110, and should it be successful device 110 may be configured to expand access given to device 120 to a second level of access, greater than the first level. Some time after that, a third co-location authentication may take place, leading to a yet increased, third level of access being granted to device 120 in case the third co-location authentication is successful. The co-location authentications may take place in a continuous manner, for example, every five or ten minutes, or device 110 may have stored in memory information indicating a number of successful co-location authentications with device 120. In the latter case, device 120 may get obtain increased access sooner, since it may benefit from earlier successful co-location authentications.

In the second phase, if may be decided that a signal is to be emitted at a time corresponding to a time the sensor, or sensors, are used to obtain the sensor output. For example, device 110 may decide to emit a signal that is detectable locally with at least one of the sensor or sensors that it is decided to use in the third phase of the co-location authentication. Device 110 may indicate to device 120 that it intends to emit a signal, or device 110 may refrain from informing device 120 of the signal, since device 110 tests device 120 for co-location in the co-location authentication. For example, if a microphone is agreed to be used, device 110 may emit an audible signal, which may have a time-variant amplitude. The microphone sensor output of device 110 captures the audible signal, and if device 120 is close enough, the microphone sensor output of device 120 also captures the audible signal. Device 110 may then, after device 120 provides its microphone sensor output to device 110, examine if the sensor output of device 120 is consistent with the audible signal. In some embodiments, the time-varying amplitude of the audible signal may act as a key. In case the correct amplitude variation is detected, device 110 may grant access to device 120. An example of an amplitude variation is a sine wave, with a frequency of the sine wave being selected by device 110, for example randomly. In case the sensor output provided to device 110 by device 120 comprises an audio signal with amplitude variation at the same frequency, device 110 may decide the co-location authentication is a success.

Alternatively to an amplitude variation, a timing value of the audible signal may be used, although in that case device 110 must allow for a propagation delay of the audible signal from device 110 to device 120. Varying signals may be emitted from device 110 also, or alternatively, using a light emitter, such as a camera flash, and/or using a radio transmitter. In some embodiments, both devices 110 and 120 may emit a signal to verify the co-location of each other independently. In some embodiments, the signal comprises components in more than one medium, for example, the signal may be a combination of an audio signal and a visible flash. The components may be detectable in sensors selected for use in the co-location authentication process.

Although described above in connection with a cellular network, some embodiments of the invention rely only on link 112. In these embodiments a cellular network is not needed, and cellular communication capability on device 110 and device 120 may likewise be absent. The need for verifying co-location may be higher where requests for access to the resources of device 110 arrive at device 110 via a cellular link, since in those cases device 110 has less information on the location of the requesting device. If the request arrives over a short-range link, it is likelier, albeit not certain, the requesting device is nearby.

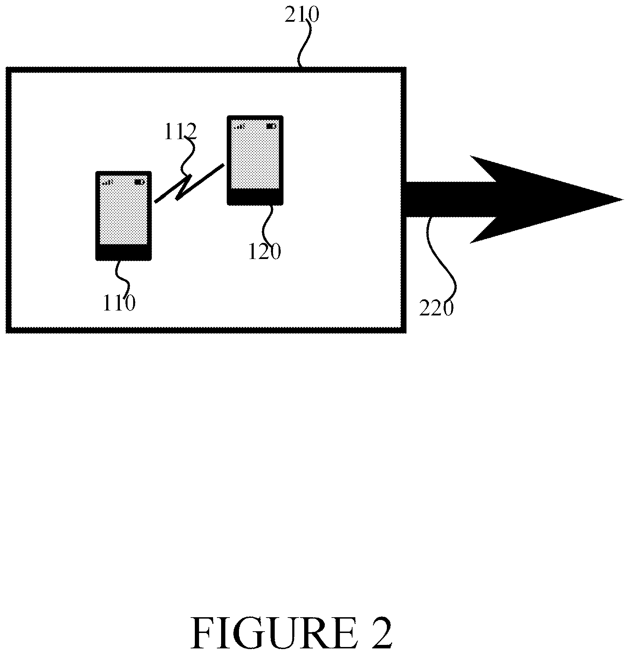

FIGURE 2 illustrates an example use case in accordance with at least some embodiments of the present invention. Like numbering in FIGURE 2 corresponds to like structure as in FIGURE 1. In the example of FIGURE 1, device 110 and device 120 are co-moving in a vehicle 210. Vehicle 210 may comprise a car or train, for example, moving generally in direction 220.

In the example of FIGURE 2, device 110 and device 120 are not only co-located but co-moving as well. Co-movement provides an additional opportunity for authentication, since by deciding to use accelerometers as sensors used to obtain sensor outputs in device 110 and device 120, devices that are close by but not co-moving may be excluded. For example, where devices 110 and 120 are in a car that has stopped at a traffic light, a device in a pocket of a person passing by is temporarily physically near to device 110. However, acceleration sensor output of such a device does not match acceleration sensor outputs of device 110 and device 120, especially so if the devices agree to obtain a sequence of accelerator sensor outputs. The accelerations of the devices in vehicle 210 reflect acceleration of the vehicle, namely changes in velocity and direction. The acceleration of a device in a passer-by's pocket reflects his gait, a difference that device 110 can observe from the sensor output. Therefore, the device located outside of vehicle 210 can be excluded from the authentication and denied access to resources of device 110.

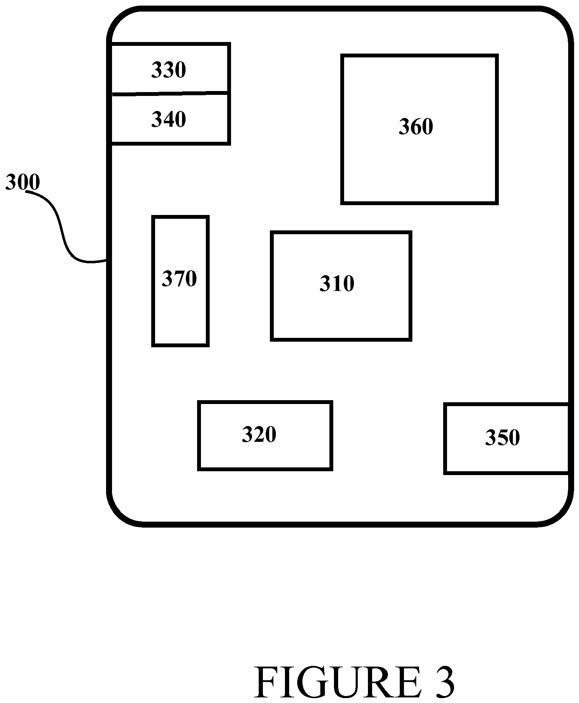

FIGURE 3 illustrates an example apparatus capable of supporting at least some embodiments of the present invention. Illustrated is device 300, which may comprise, for example, device 110 of FIGURE 1 or FIGURE 2. Comprised in device 300 is processor 310, which may comprise, for example, a single- or multi-core processor wherein a single-core processor comprises one processing core and a multi-core processor comprises more than one processing core. Processor 310 may comprise a Qualcomm Snapdragon 800 processor, for example. Processor 310 may comprise more than one processor. A processing core may comprise, for example, a Cortex-A8 processing core manufactured by ARM Holdings or a Brisbane processing core produced by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

Device 300 may comprise memory 320. Memory 320 may comprise random-access memory and/or permanent memory. Memory 320 may comprise at least one RAM chip. Memory 320 may comprise magnetic, optical and/or holographic memory, for example. Memory 320 may be at least in part accessible to processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games. The user may also be enabled via UI 360 to manage access rights to be granted to further devices, for example based on co-location authentication.

Device 300 may comprise at least one sensor 370. Sensor 370 may comprise, for example, a microphone, a photodetector, an acceleration sensor, a gyroscope, a chemical analyser or a satellite positioning receiver.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above.

Processor 310, memory 320, transmitter 330, receiver 340, NFC transceiver 350, UI 360 and/or sensor 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

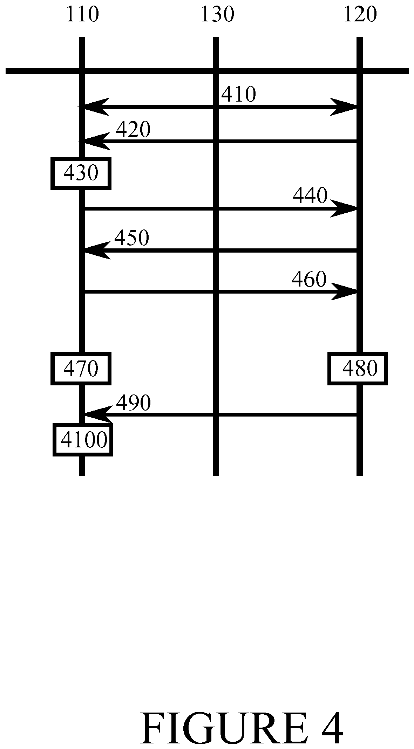

FIGURE 4 illustrates signalling in accordance with at least some embodiments of the present invention. On the vertical axes are disposed, from left to right, in terms of FIGURE 1, device 110, base station 130 and device 120. Time advances from the top toward the bottom. In the example illustrated in FIGURE 4, device 110 and device 120 communicate with each other by transmitting messages via base station 130. In other words, for each message either device 110 or device 120 is the endpoint, while the message may be relayed via base station 130.

In phase 410, devices 110 and 120 discover each other. The discovery process may take place via a social media network or via a proximity detection, for example. In phase 420 device 120 requests to be given access to at least one resource of device 110. Examples of suitable resources may comprise files or network connectivity, for example, as described above. Alternatively, device 120 may request access to device 110 in general.

In phase 430, device 110 may device, whether to initiate co-location authentication with device 120. For example, the decision may be based on whether device 120 is on a whitelist, or a blacklist, of device 110. Responsive to device 120 being on a whitelist, the requested access may be given without co-location authentication. Responsive to device 120 being on a blacklist, the requested access may be declined without co-location authentication.

Responsive to deciding, in phase 430, to initiate co-location authentication with device 120, device 110 may send, in phase 440, an offer to device 120. The offer may comprise a list of types of location-sensitive sensors that device 110 has. In phase 450, device 120 may return the list back to device 110, having removed from the list those sensor types that device 120 does not have. Therefore, the list transmitted in phase 450 is a list of location-sensitive sensor types that device 110 and device 120 both have.

In phase 460, device 110 may transmit to device 120 instructions concerning obtaining sensor output using at least one sensor type comprised in the list of phase 450. These instructions may include instructions as to when, and for how long, the sensor output is to be obtained, and/or using which sensor or sensors of the list of phase 450. These instructions may include instructions to obtain sensor output in at least two bursts, for example two five-second bursts separated from each other by a ten second interval.

In simultaneous phases 470 and 480, devices 110 and 120, respectively, obtain sensor output in accordance with the instructions of phase 460. In phase 490, device 120 reports to device 110 the sensor output it obtained in phase 480.

In decision phase 4100, device 110 compares sensor output it obtained in phase 470 to sensor output it received from device 120 in phase 490. In case the sensor outputs match, that is, for example, they differ less than a predetermined amount, device 110 may decide to grant device 120 at least partial access to resources of device 110. The access granted in phase 4100 may be less than the access that was requested in phase 420 even if the sensor outputs match.

The comparison of phase 4100 may comprise a more involved comparison than comparing amplitudes of sensor output. For example, where a time-variant signal pattern is present in the sensor output of phase 470, device 110 may search for a corresponding signal pattern in the sensor output of phase 480. In this case, the result of the comparison may be a match even if amplitudes are different, in case the same signal pattern is present is both sensor outputs.

In case the sensor outputs to not match, device 110 may decline to give access to device 120. Device 110 may indicate this explicitly to device 120 by transmitting a message, or device 110 may simply not respond to device 110, in effect declining implicitly by refusing to respond.

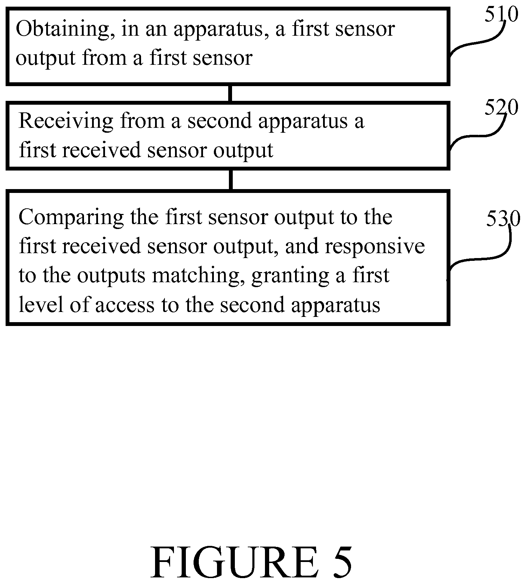

FIGURE 5 is a first flow chart of a first method related to at least some embodiments of the present invention. The phases of the illustrated method may be performed in device 110, for example, or in a control device configured to control the functioning of device 110, when implanted therein.

Phase 510 comprises obtaining, in an apparatus, a first sensor output from a first sensor. The first sensor may be comprised in the apparatus. The apparatus may be an apparatus performing the method. Phase 520 comprises receiving from a second apparatus a first received sensor output. Finally, phase 530 comprises comparing the first sensor output to the first received sensor output, and responsive to the outputs matching, granting a first level of access to the second apparatus.

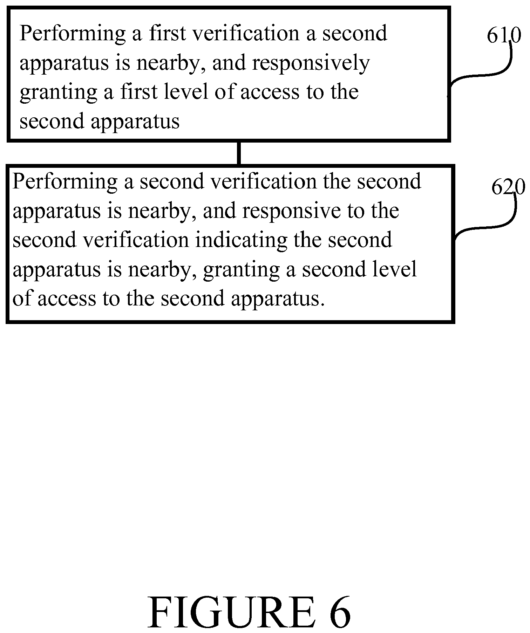

FIGURE 6 is a second flow chart of a second method related to at least some embodiments of the present invention. The phases of the illustrated method may be performed in device 110, for example, or in a control device configured to control the functioning of device 110, when implanted therein.

Phase 610 comprises performing a first verification a second apparatus is nearby, and responsive to the first verification indicating the second apparatus is nearby, granting a first level of access to the second apparatus. Nearby may comprise physically near to an apparatus performing the method, for example. Granting access may comprise granting access to resources of the apparatus performing the method. Phase 620 comprises performing a second verification the second apparatus is nearby, and responsive to the second verification indicating the second apparatus is nearby, granting a second level of access to the second apparatus. The second level of access may be superior to the first level of access, in that access is granted to more resources. A verification the second apparatus is nearby may comprise a co-location authentication, for example, as described above. The first and second verifications may comprise sensor-based verifications as described above.

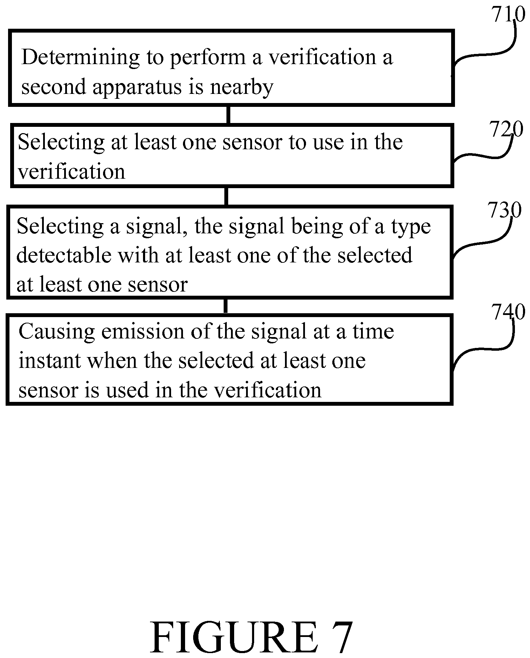

FIGURE 7 is a third flow chart of a third method related to with at least some embodiments of the present invention. The phases of the illustrated method may be performed in device 110, for example, or in a control device configured to control the functioning of device 110, when implanted therein.

Phase 710 comprises determining to perform a verification a second apparatus is nearby, for example to a first apparatus performing the method. The verification may comprise a sensor-based co-location authentication, for example, as described above. Phase 720 comprises selecting at least one sensor to use in the verification. This selection may comprise agreeing with the second apparatus on at least one sensor type to employ in the verification simultaneously with the first apparatus, for example.

Phase 730 comprises selecting a signal, the signal being of a type detectable with at least one of the selected at least one sensor. Finally, phase 740 comprises causing emission of the signal at a time instant when the selected at least one sensor is used in the verification. For example, where the selected sensor comprises a microphone, phase 730 may comprise causing emission of a sound at a time when the microphone is used as part of the verification.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. A method comprising:
causing a first apparatus (120) to participate in determining, with a second apparatus (110), a set of common location-sensitive sensors; obtaining, in the first apparatus, a first sensor output from a first sensor of said set of common location-sensitive sensors;
receiving , by the first apparatus, from the second apparatus a first received sensor output of a sensor of said set of common location-sensitive sensors;
comparing, by the first apparatus, the first sensor output to the first received sensor output, and
responsive to the outputs matching, granting a first level of access to the second apparatus.

2. The method according to claim 1, further comprising agreeing a first time instant with the second apparatus, and wherein the first sensor output is obtained at the first time instant.

3. The method according to claim 1 or 2, further comprising causing the first apparatus to calibrate, in connection with determining the set of common location-sensitive sensors, its internal clock with a clock of the second apparatus.

4. The method according to claim 3, comprising obtaining a sensor output from each location-sensitive sensor, and comparing each thus obtained sensor output to a respective received sensor output from the second apparatus.

5. The method according to claim 4, further comprising granting the first level of access responsive to each of the obtained sensor outputs matching the respective received sensor output from the second apparatus.

6. The method according to any of claims 2 - 5, further comprising obtaining a second sensor output from the first sensor, receiving a second received sensor output from the second apparatus, and responsive to the second sensor output and the second received sensor output matching, granting a second level of access to the second apparatus, the second level of access being greater than the first level of access.

7. The method according to claim 6, further comprising agreeing a second time instant with the second apparatus, the second time instant occurring after the first time instant, and wherein the second sensor output is obtained at the second time instant.

8. The method according to any of claims 2 - 6, further comprising determining, whether prior to the first time instant, the first apparatus has received from the second apparatus a prior received sensor output that has matched a prior sensor output obtained from the first sensor, and responsive to such a match being determined to have occurred, granting a second level of access to the second apparatus, the second level of access being greater than the first level of access.

9. The method according to any of claims 2 - 8, further comprising causing emission of a signal at the first time instant, the signal being detectable with the first sensor.

10. The method according to claim 9, wherein the signal comprises at least one of the following: an electromagnetic signal, an acoustic signal, a light signal and a chemical signal.

11. The method according to claim 9 or 10, wherein comparing the first sensor output to the first received sensor output comprises determining whether the first received sensor output is consistent with the signal.

12. The method according to any of claims 2 - 11, wherein the first sensor is comprised in the first apparatus.

13. The method according to any of claims 2 - 12, wherein the first sensor is comprised in the following list: a microphone, a radio receiver, a photodetector and a chemical sampling device.

14. An apparatus (110) comprising at least one processing core and at least one memory including computer program code, the at least one memory and the computer program code being configured to, with the at least one processing core, cause the apparatus at least to:
participate in determining, with a second apparatus, a set of common location-sensitive sensors; obtain a first sensor output from a first sensor of said set of common location-sensitive sensors; receive from the second apparatus (120) a first received sensor output of a sensor of said set of common location -sensitive sensors;
compare the first sensor output to the first received sensor output, and responsive to the outputs matching, grant a first level of access to the second apparatus.

15. A computer program configured to cause a method in accordance with at least one of claims 1 - 13 to be performed.

## Patentansprüche

1. Verfahren, umfassend:
Veranlassen einer ersten Einrichtung (120), daran teilzunehmen, mit einer zweiten Einrichtung (110) einen Satz von gemeinsamen ortssensitive Sensoren zu bestimmen; Erhalten, in der ersten Einrichtung, einer ersten Sensorausgabe von einem ersten Sensor des Satzes von gemeinsamen ortssensitiven Sensoren;
Empfangen, durch die erste Einrichtung, von der zweiten Einrichtung, einer ersten empfangenen Sensorausgabe eines Sensors des Satzes von gemeinsamen ortssensitiven Sensoren;
Vergleichen, durch die erste Einrichtung, der ersten Sensorausgabe mit der ersten empfangenen Sensorausgabe und
in Reaktion darauf, dass die Ausgaben übereinstimmen, Erteilen einer ersten Ebene des Zugriffs auf die zweite Einrichtung.

2. Verfahren nach Anspruch 1, ferner umfassend das Vereinbaren eines ersten Zeitpunkts mit der zweiten Einrichtung, und wobei die erste Sensorausgabe zu dem ersten Zeitpunkt erhalten wird.

3. Verfahren nach Anspruch 1 oder 2, ferner umfassend das Veranlassen der ersten Einrichtung, in Verbindung mit dem Bestimmen des Satzes von gemeinsamen ortssensitiven Sensoren, ihren internen Takt mit einem Takt der zweiten Einrichtung zu kalibrieren.

4. Verfahren nach Anspruch 3, umfassend das Erhalten einer Sensorausgabe von jedem ortssensitiven Sensor, und Vergleichen jeder so erhaltenen Sensorausgabe mit einer jeweiligen empfangenen Sensorausgabe von der zweiten Einrichtung.

5. Verfahren nach Anspruch 4, ferner umfassend das Erteilen der ersten Ebene des Zugriffs in Reaktion auf jede der erhaltenen Sensorausgaben, die mit der entsprechenden empfangenen Sensorausgabe von der zweiten Einrichtung übereinstimmt.

6. Verfahren nach einem der Ansprüche 2 - 5, ferner umfassend das Erhalten einer zweiten Sensorausgabe von dem ersten Sensor, das Empfangen einer zweiten empfangenen Sensorausgabe von der zweiten Einrichtung und in Reaktion darauf, dass die zweite Sensorausgabe und die zweite empfangene Sensorausgabe übereinstimmen, das Erteilen einer zweiten Ebene des Zugriffs auf die zweite Einrichtung, wobei die zweite Ebene des Zugriffs größer ist als die erste Ebene des Zugriffs.

7. Verfahren nach Anspruch 6, ferner umfassend das Vereinbaren eines zweiten Zeitpunkts mit der zweiten Einrichtung, wobei der zweite Zeitpunkt nach dem ersten Zeitpunkt eintritt, und wobei die zweite Sensorausgabe zu dem zweiten Zeitpunkt erhalten wird.

8. Verfahren nach einem der Ansprüche 2 - 6, ferner umfassend das Bestimmen, ob die erste Einrichtung vor dem ersten Zeitpunkt von der zweiten Einrichtung eine vorherig empfangene Sensorausgabe erhalten hat, die mit einer vorherigen, von dem von dem ersten Sensor erhaltenen Sensorausgabe übereingestimmt hat, und in Reaktion darauf, dass eine solche Übereinstimmung als eingetreten bestimmt wird, das Erteilen einer zweiten Ebene des Zugriffs auf die zweite Einrichtung, wobei die zweite Ebene des Zugriffs größer ist als die erste Ebene des Zugriffs.

9. Verfahren nach einem der Ansprüche 2 - 8, ferner umfassend das Veranlassen der Abstrahlung eines Signals zu dem ersten Zeitpunkt, wobei das Signal mit dem ersten Sensor erkennbar ist.

10. Verfahren nach Anspruch 9, wobei das Signal wenigstens eines der Folgenden umfasst: ein elektromagnetisches Signal, ein akustisches Signal, ein Lichtsignal und ein chemisches Signal.

11. Verfahren nach Anspruch 9 oder 10, wobei das Vergleichen der ersten Sensorausgabe mit der ersten empfangenen Sensorausgabe das Bestimmen umfasst, ob die erste empfangene Sensorausgabe dem Signal entspricht.

12. Verfahren nach einem der Ansprüche 2 - 11, wobei der erste Sensor in der ersten Einrichtung enthalten ist.

13. Verfahren nach einem der Ansprüche 2 - 12, wobei der erste Sensor in der folgenden Liste enthalten ist: Mikrofon, Funkempfänger, Fotodetektor und chemische Abtastvorrichtung.

14. Einrichtung (110), umfassend wenigstens einen Verarbeitungskern und wenigstens einen Speicher, der einen Computerprogrammcode beinhaltet, wobei der wenigstens eine Speicher und der Computerprogrammcode dafür ausgelegt sind, mit dem wenigstens einen Verarbeitungskern die Einrichtung zu veranlassen, wenigstens:
Die Einrichtung zu veranlassen, daran teilzunehmen, mit einer zweiten Einrichtung einen Satz von gemeinsamen ortssensitiven Sensoren zu bestimmen; eine erste Sensorausgabe von einem ersten Sensor des Satzes von gemeinsamen ortssensitiven Sensoren zu erhalten; von der zweiten Einrichtung (120) eine erste empfangene Sensorausgabe eines Sensors des Satzes von gemeinsamen ortssensitiven Sensoren zu empfangen;
die erste Sensorausgabe mit der ersten empfangenen Sensorausgabe zu vergleichen und in Reaktion darauf, dass die Ausgaben übereinstimmen, eine erste Ebene des Zugriffs auf die zweite Einrichtung zu erteilen.

15. Computerprogramm, das dafür ausgelegt ist, zu veranlassen, dass ein Verfahren gemäß wenigstens einem der Ansprüche 1 - 13 durchgeführt wird.

## Revendications

1. Procédé comprenant :
le fait d'amener un premier appareil (120) à participer à la détermination, avec un deuxième appareil (110), d'un ensemble de capteurs sensibles à un emplacement commun ; l'obtention, dans le premier appareil, d'une première sortie de capteur en provenance d'un premier capteur dudit ensemble de capteurs sensibles à un emplacement commun ;
la réception, par le premier appareil, en provenance du deuxième appareil, d'une première sortie de capteur reçue d'un capteur dudit ensemble de capteurs basés sur un emplacement commun ;
la comparaison, par le premier appareil, de la première sortie de capteur avec la première sortie de capteur reçue, et
en réponse au fait que les sorties correspondent, l'octroi d'un premier niveau d'accès au deuxième appareil.

2. Procédé selon la revendication 1, comprenant en outre le fait de convenir d'un premier instant temporel avec le deuxième appareil, et dans lequel la première sortie de capteur est obtenue au premier instant temporel.

3. Procédé selon la revendication 1 ou la revendication 2, comprenant en outre le fait d'amener le premier appareil à étalonner, en relation avec la détermination de l'ensemble de capteurs sensibles à l'emplacement commun, son horloge interne avec une horloge du deuxième appareil.

4. Procédé selon la revendication 3, comprenant l'obtention d'une sortie de capteur de chaque capteur sensible à un emplacement, et la comparaison de chaque sortie de capteur ainsi obtenue avec une sortie de capteur reçue respective en provenance du deuxième appareil.

5. Procédé selon la revendication 4, comprenant en outre l'octroi du premier niveau d'accès en réponse au fait que chacune des sorties de capteur obtenues correspond à la sortie de capteur reçue respective en provenance du deuxième appareil.

6. Procédé selon l'une quelconque des revendications 2 à 5, comprenant en outre l'obtention d'une deuxième sortie de capteur en provenance du premier capteur, la réception d'une deuxième sortie de capteur reçue en provenance du deuxième appareil, et en réponse au fait que la deuxième sortie de capteur et la deuxième sortie de capteur reçue correspondent, l'octroi d'un deuxième niveau d'accès au deuxième appareil, le deuxième niveau d'accès étant supérieur au premier niveau d'accès.

7. Procédé selon la revendication 6, comprenant en outre le fait de convenir d'un deuxième instant temporel avec le deuxième appareil, le deuxième instant temporel se produisant après le premier instant temporel, et dans lequel la deuxième sortie de capteur est obtenue au deuxième instant temporel.

8. Procédé selon l'une quelconque des revendications 2 à 6, comprenant en outre le fait de déterminer si avant le premier instant temporel, le premier appareil a reçu en provenance du deuxième appareil une sortie de capteur reçue antérieure qui a correspondu à une sortie de capteur antérieure obtenue du du premier capteur, et en réponse au fait d'avoir déterminé qu'une telle correspondance s'est produite, l'octroi d'un deuxième niveau d'accès au deuxième appareil, le deuxième niveau d'accès étant supérieur au premier niveau d'accès.

9. Procédé selon l'une quelconque des revendications 2 à 8, comprenant en outre le fait d'engendrer une émission d'un signal au premier instant temporel, le signal pouvant être détecté avec le premier capteur.

10. Procédé selon la revendication 9, dans lequel le signal comprend au moins un des éléments suivants : un signal électromagnétique, un signal acoustique, un signal lumineux et un signal chimique.

11. Procédé selon la revendication 9 ou la revendication 10, dans lequel la comparaison de la première sortie de capteur avec la première sortie de capteur reçue comprend le fait de déterminer si la première sortie de capteur reçue est cohérente avec le signal.

12. Procédé selon l'une quelconque des revendications 2 à 11, dans lequel le premier capteur est compris dans le premier appareil.

13. Procédé selon l'une quelconque des revendications 2 à 12, dans lequel le premier capteur est compris dans la liste suivante : un microphone, un récepteur radio, un photodétecteur et un dispositif d'échantillonnage chimique.

14. Appareil (110) comprenant au moins un cœur de traitement et au moins une mémoire incluant un code de programme informatique, l'au moins une mémoire et le code de programme informatique étant configurés avec l'au moins un cœur de traitement pour amener l'appareil au moins à :
amener l'appareil à participer à la détermination, avec un deuxième appareil, d'un ensemble de capteurs sensibles à un emplacement commun ; obtenir une première sortie de capteur en provenance d'un premier capteur dudit ensemble de capteurs sensibles à un emplacement commun ; recevoir en provenance du deuxième appareil (120) une première sortie de capteur reçue d'un capteur dudit ensemble de capteurs sensibles à un emplacement commun ;
comparer la première sortie de capteur avec la première sortie de capteur reçue, et, en réponse au fait que les sorties correspondent, octroyer un premier niveau d'accès au deuxième appareil.

15. Programme informatique configuré pour mettre en œuvre un procédé conformément à au moins une des revendications 1 à 13.
